# EUROPEAN PATENT APPLICATION

(11) **EP 3 979 135 A1**
(43) Date of publication of application: **06.04.2022**
(21) Application number: 20815052.4
(22) Date of filing: 20.05.2020
(51) Int. Cl.: G06K 19/07, G06K 19/077

(54) **RFID TAG**

(30) Priority: 28.05.2019 JP 2019099292
(71) Applicant: Kyocera Corporation, Kyoto-shi, Kyoto 612-8501 (JP)
(72) Inventor: NIINO, Noritaka, Kyoto-shi, Kyoto 612-8501 (JP); TANAKA, Yuichi, Kyoto-shi, Kyoto 612-8501 (JP)
(74) Representative: Viering, Jentschura & Partner mbB Patent- und Rechtsanwälte
(86) International application number: PCT/JP2020/019851
(87) International publication number: WO 2020/241392

(57) **Abstract**

The purpose of this invention is to provide an RFID tag having high ESD resistance. This RFID tag is equipped with an RFID IC and a functional module, a housing which houses the RFID IC and a functional module in a recess therewithin, and a window member positioned in an opening of the recess. The housing has ribs which are positioned between the functional module and the sidewall of the recess, with a gap interposed between the ribs and the sidewall.

## Description

### Technical Field

The present invention relates to an RFID tag including a functional module(s).

### Background Art

There is disclosed in JP 2002-065418 A an RFID tag including a display device and a solar cell. This RFID tag has a memory storing product information, and can update the product information, which is displayed by the display device, by a reader/writer rewriting the product information through wireless communication.

### Summary of Invention

### Solution to Problem

An RFID tag according to the present disclosure includes:
an RFID IC;
a functional module;
a case having a recess and accommodating the RFID IC and the functional module in the recess; and
a window member disposed in an opening of the recess,
wherein the case has a rib located between the functional module and a side wall of the recess so as to be spaced from the side wall.

### Brief Description of Drawings

FIG. 1 is an exploded perspective view of an RFID tag according to a first embodiment of the present disclosure.
FIG. 2 is a block diagram showing circuit configuration of the RFID tag of the first embodiment.
FIG. 3 is a plan view showing configuration in which a circuit board and functional modules are mounted in a case.
FIG. 4 is a vertical sectional view of the RFID tag of the first embodiment, schematically showing its internal structure.
FIG. 5 is a bottom view of a window member.
FIG. 6 is a perspective view showing ribs formed in the case according to a first modification.
FIG. 7A is a plan view of the case, showing details of the ribs of the first modification.
FIG. 7B is a sectional view at line C-C shown in FIG. 7A.
FIG. 8 is a perspective view showing ribs formed in the case according to a second modification.
FIG. 9A is a plan view of the case, showing details of the ribs of the second modification.
FIG. 9B is a sectional view at line D-D shown in FIG. 9A.
FIG 10 is a sectional view of a mounting structure for a photovoltaic panel(s) according to a third modification.
FIG. 11 is a diagram to explain a path for electrostatic discharge to enter.
FIG. 12A is a vertical sectional view of an RFID tag of a second embodiment of the present disclosure, schematically showing its internal structure.
FIG. 12B is an enlarged view of a part of the vertical sectional view of FIG. 12A.

### Description of Embodiments

Hereinafter, one or more embodiments of the present disclosure will be described in detail with reference to the drawings. In this description, directions of each component may be expressed by using directions of three axes, X, Y and Z, shown in the drawings. The X axis, Y axis and Z axis are three axes that are at right angles to one another. The Z direction is a direction from/toward the bottom toward/from the opening of a recess 12 of a case 10, and the X direction and Y direction are directions in which the opening of the case 10 extends. The directions of each component may also be expressed by using the right-left/lateral direction, front-back direction and up-down/height direction as the X direction, Y direction and Z direction, respectively. However, it is unnecessary that the directions described in this description are the same as directions of an RFID tag 1 in use.

### (First Embodiment)

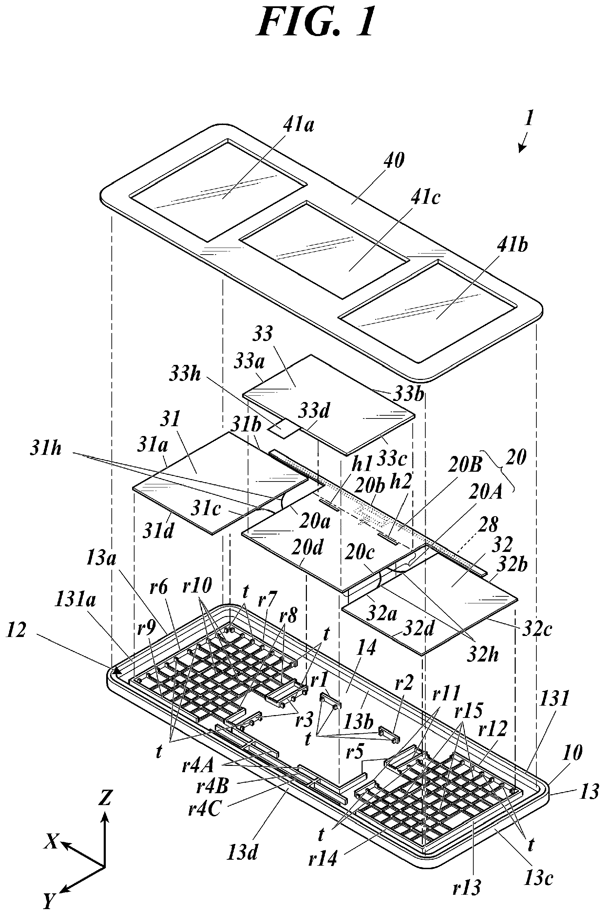

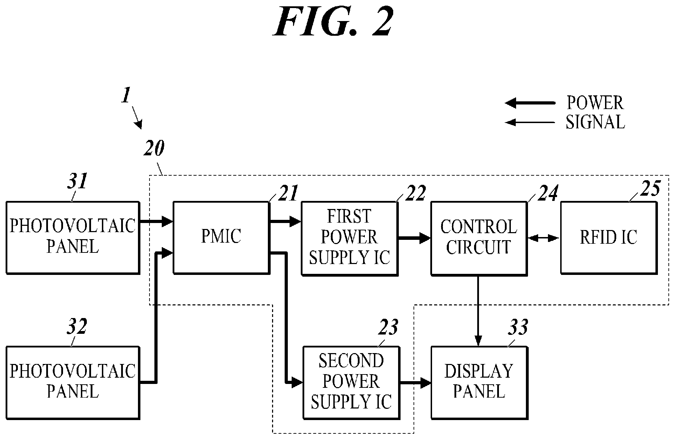

FIG. 1 is an exploded perspective view of an RFID tag according to a first embodiment of the present disclosure. FIG. 2 is a block diagram showing circuit configuration of the RFID tag of the first embodiment.

As shown in FIG. 1, an RFID tag 1 of the first embodiment includes a case 10, a circuit board 20, photovoltaic panels 31, 32 and a display panel 33 as functional modules, and a window member 40. As shown in FIG. 2, the RFID tag 1 further includes a PMIC (Power Management Integrated Circuit) 21 that receives generated power from the photovoltaic panels 31, 32 and manages the power, a first power supply IC 22 that receives power from the PMIC 21 and generates a power supply voltage for a control system, and a second power supply IC 23 that receives power from the PMIC 21 and generates a drive voltage for the display panel 33. The RFID tag 1 also includes an RFID IC 25 that performs wireless communication with a reader/writer through radio waves and a control circuit 24 that communicates with the RFID IC 25 and controls display of the display panel 33. The PMIC 21, the first power supply IC 22, the second power supply IC 23, the control circuit 24 and the RFID IC 25 are mounted on the circuit board 20. The RFID IC 25 may not be mounted on the circuit board 20 but be connected thereto through a wiring.

The RFID IC 25 performs wireless communication by using, for example, radio waves (e.g. 920 MHz) in the UHF (Ultra High Frequency) band. The RFID IC 25 includes a reader/writer readable/writable storage. In the storage, identification information, management information and/or the like is stored. The control circuit 24 is, for example, a microcomputer, and can read out the information in the storage of the RFID IC 25 by communicating with the RFID IC 25. The control circuit 24 and the RFID IC 25 operate by receiving the power supply voltage from the first power supply IC 22. The control circuit 24 can control display content of the display panel 33 on the basis of the read-out information.

The circuit board 20 has a main part 20A extending in the X, Y directions and an extended part 20B extending along one side (edge) in the Y direction of the main part 20A and extending long on both sides of the main part 20A in the X direction (shown in FIG. 1). On the extended part 20B, an antenna conductor 28 for the RFID IC 25 is formed. Near the border between the main part 20A and the extended part 20B, the circuit board 20 may have long holes h1, h2 into which ribs r1, r2 of the case 10 are inserted. The main part 20A may be rectangular in plan view.

The display panel 33 is, for example, a liquid crystal display panel, and electrically connected to the circuit board 20 through a wiring (e.g. a film wiring) 33h. The display panel 33 may have a shape of a rectangular plate. The wiring 33h may be detachably connected to the circuit board 20 through a connector thereon.

The photovoltaic panels 31, 32 generate power by receiving light from outside. Each of the photovoltaic panels 31, 32 may have a shape of a rectangular plate. The photovoltaic panels 31, 32 are electrically connected to the circuit board 20 through wirings (e.g. lead wires) 31h, 32h. The wirings 31h, 32h may be detachably connected to the circuit board 20 through connectors thereon.

The case 10 has the recess 12 with one side opened, and can accommodate, in the recess 12, the circuit board 20 and the display panel 33 on top of one another and the two photovoltaic panels 31, 32 on the left and right of the display panel 33. The case 10 is made of, as a main material, engineering plastic, such as ABS (acrylonitrile butadiene styrene resin), PC (polycarbonate), POM (polyacetal), PP (polypropylene), PPS (polyphenylene sulfite), PA (polyamide), EVA (ethylene vinyl acetate copolymer), PE (polyethylene), PBT (polybutylene terephthalate), PS (polystyrene), EP (epoxy resin) or PF (phenolic resin), and formed, for example, by injection molding. The case 10 may be formed of a mixture of any of the above materials as a main material with another material, or may be formed of such a material further containing inorganic filler.

The window member 40 has transparent windows 41a to 41c in areas respectively overlapping (or coinciding with) the photovoltaic panels 31, 32 and the display panel 33 as viewed in the Z direction. The window member 40 closes the opening of the recess 12 of the case 10 and seals off the case 10. The window member 40 may have a shape of a flat plate. The window member 40 may be made of, for example, polycarbonate.

### <Details of Structure of Case>

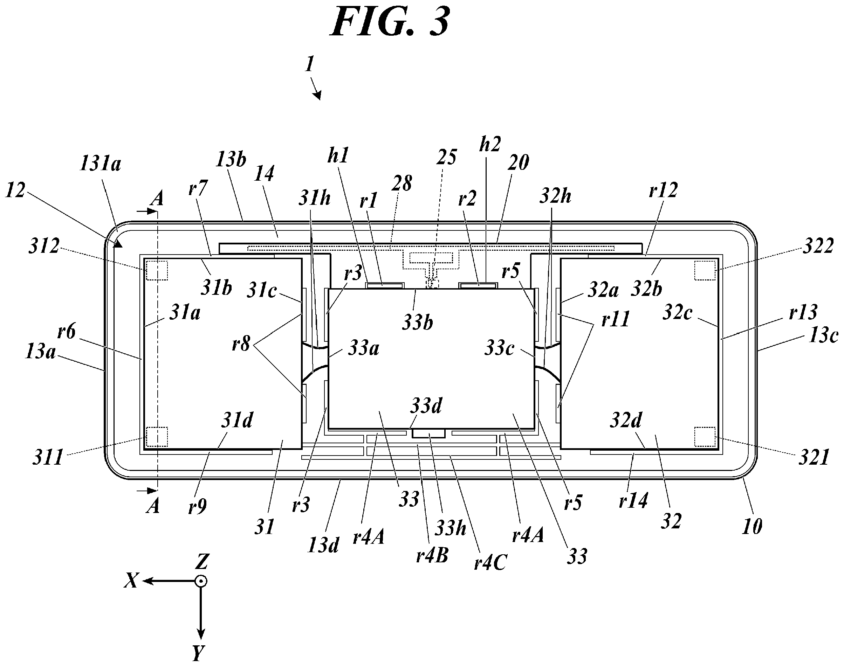

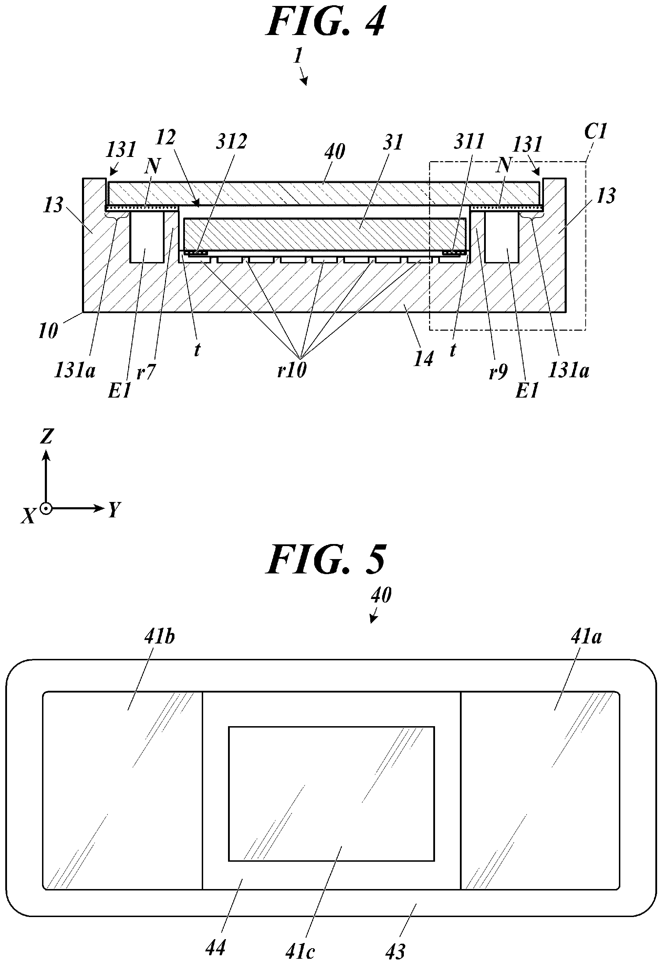

FIG. 3 is a plan view showing configuration in which the circuit board and the functional modules are mounted in the case. FIG. 4 is a vertical sectional view of the RFID tag of the first embodiment, schematically showing its internal structure. FIG. 5 is a bottom view of the window member.

The recess 12 of the case 10 is surrounded by a side wall 13 on its side and a bottom plate 14 on its bottom, with its top opened. The side wall 13 has, at the upper end, a step part 131 having a portion closer to the inner periphery being one step lower. The surface of the lower portion of the step part 131 is called a frame surface 131a. The frame surface 131a is joined to the edge of the lower surface of the window member 40 with an adhesive member (e.g. double-sided tape) N to position the edge of the lower surface of the window member 40. The frame surface 131a may be present all around the opening of the recess 12 and joined to the entire outer peripheral edge of the lower surface of the window member 40. The frame surface 131a corresponds to an example of a first surface of the present disclosure.

The case 10 has ribs r1 to r15 (shown in FIG. 1 and FIG. 3) arranged on the bottom plate 14 of the recess 12. The ribs r1 to r15 project in the Z direction and are integrally formed with the other parts of the case 10 by injection molding of resin. Hereinafter, four sides of the photovoltaic panel 31 as viewed in the -Z direction are referred to as a first side part 31a to a fourth side part 31d, starting from the side located in the +X direction clockwise. Similarly, four sides of the photovoltaic panel 32 and four sides of the display panel 33 are referred to as a first side part 32a to a fourth side part 32d and as a first side part 33a to a fourth side part 33d, respectively. Also, similarly, three sides of the main part 20A of the circuit board 20 (three sides located in the +X direction, the +Y direction and the -X direction) and one side of the extended part 20B (one side located in the -Y direction) are referred to as a first side part 20a to a fourth side part 20d clockwise. Also, of the side wall 13 having a shape of a rectangular frame as the case 10 is viewed in the -Z direction, the part located in the +X direction, the part located in the -Y direction, the part located in the -X direction and the part located in the +Y direction are referred to as a first frame part 13a, a second frame part 13b, a third frame part 13c and a fourth frame part 13d, respectively.

The ribs r1, r2 pass through the long holes h1, h2 of the circuit board 20 and are located between the second side part 33b of the display panel 33 and the second frame part 13b of the side wall 13. Between the ribs r1, r2 and the second frame part 13b, a gap is present (it is unnecessary that the gap is present therebetween entirely). The ribs r1, r2 in their longer direction(s) extend along the second side part 33b of the display panel 33. The ribs r1, r2 are located in contact with or apart by a clearance from the second side part 33b of the display panel 33 to position the second side part 33b of the display panel 33.

The ribs r3 are located between (i) the first side parts 20a, 33a of the circuit board 20 and the display panel 33 and (ii) the photovoltaic panel 31 and extend along the first side parts 20a, 33a to position the first side parts 20a, 33a. The ribs r5 are located between (i) the third side parts 20c, 33c of the circuit board 20 and the display panel 33 and (ii) the photovoltaic panel 32 and extend along the third side parts 20c, 33c to position the third side parts 20c, 33c.

The ribs r4A, r4B, r4C are located between (i) the fourth side parts 20d, 33d of the circuit board 20 and the display panel 33 and (ii) the fourth frame part 13d of the side wall 13. Between the ribs r4A and the rib r4B, between the rib r4B and the rib r4C and between the rib r4C and the fourth frame part 13d, gaps are present. No gap may be present between any of these. The ribs r4A, r4B, r4C each extend in a direction along the fourth side parts 20d, 33d. The ribs r4A are located in contact with or apart by a clearance from the fourth side parts 20d, 33d to position the fourth side parts 20d, 33d. The ribs r4A, r4B, r4C are disposed in parallel at intervals in the Y direction.

Near the ribs r1 to r3, r4A, r5, projections t lower than the ribs r1 to r3, r4A, r5 may be provided so as to be attached thereto. The projections t contact the edge of the circuit board 20 to position the circuit board 20 in the Z direction.

The rib r6 is located between the first side part 31a of the photovoltaic panel 31 and the first frame part 13a of the side wall 13. Between the rib r6 and the first frame part 13a, a gap is present (it is unnecessary that the gap is present therebetween entirely). The rib r6 extends along the first side part 31a. The rib r6 is located in contact with or apart by a clearance from the first side part 31a to position the first side part 31a.

The relationship between the rib r7, the second side part 31b of the photovoltaic panel 31 and the second frame part 13b of the side wall 13 and the relationship between the rib r9, the fourth side part 31d of the photovoltaic panel 31 and the fourth frame part 13d of the side wall 13 are each the same as the above-described relationship between the rib r6, the first side part 31a and the first frame part 13a.

The ribs r8 are located between the third side part 31c of the photovoltaic panel 31 and the display panel 33 and extend along the third side part 31c of the photovoltaic panel 31 to position the third side part 31c.

The ribs r6, r7, r9 may be continuous at corners near electrodes 311, 312 (shown in FIG. 3) of the photovoltaic panel 31 and extend so as to overlap/cover the electrodes 311, 312 of the photovoltaic panel 31 as they are seen through in the X, Y directions.

Near the ribs r6 to r9, projections t one step lower than the ribs r6 to r9 may be provided so as to be attached thereto. The projections t contact the edge of the photovoltaic panel 31 to position the photovoltaic panel 31 in the Z direction. The projections t may position the photovoltaic panel 31 such that the upper surface of the photovoltaic panel 31 is located at substantially the same height as the lower surface of the window member 40. That is, the upper surface of the photovoltaic panel 31 is at a height so as to be as close as possible to the lower surface of the window member 40. This positioning reduces the amount of shadow that is cast by the non-transparent part(s) of the window member 40 on the photovoltaic panel 31, and consequently can improve power generation efficiency of the photovoltaic panel 31.

The ribs r10 (shown in FIG. 1 and FIG. 4) are lower than the ribs r6 to r9, form a grating shape, and are located in an area surrounded by the ribs r6 to r9. The ribs r10 improve rigidity of the case 10. The ribs r10 may be formed so as to surround the electrodes 311, 312 of the photovoltaic panel 31. This can keep electricity of electrostatic discharge from reaching the electrodes 311, 312.

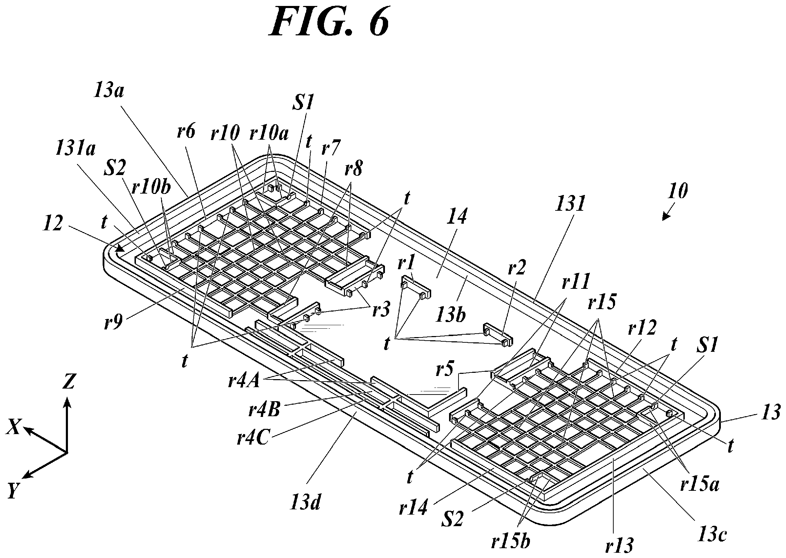

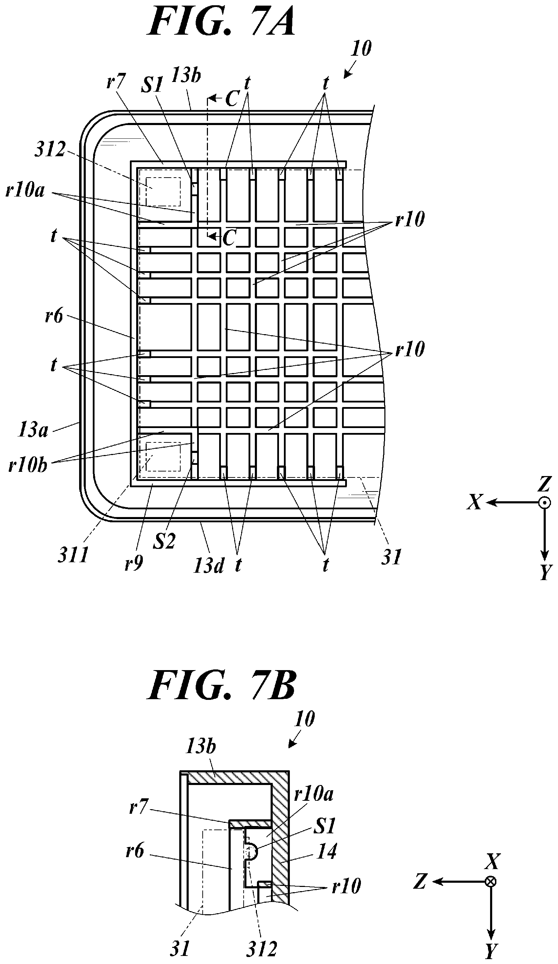

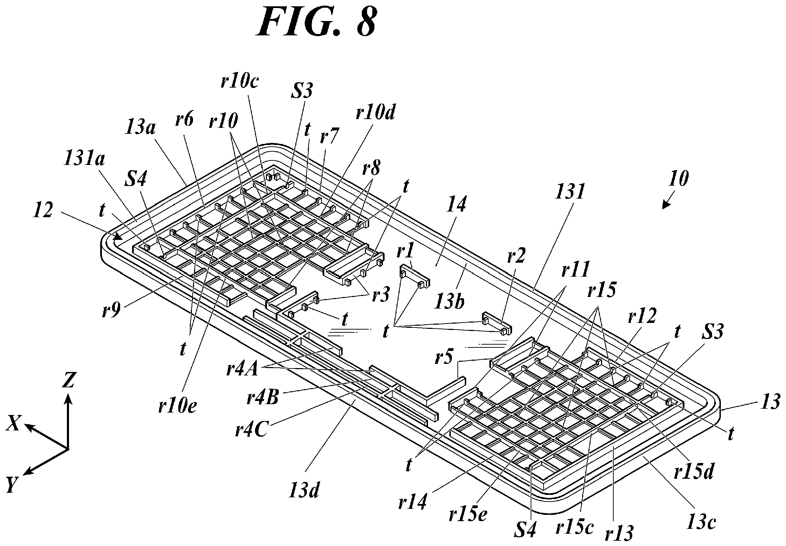

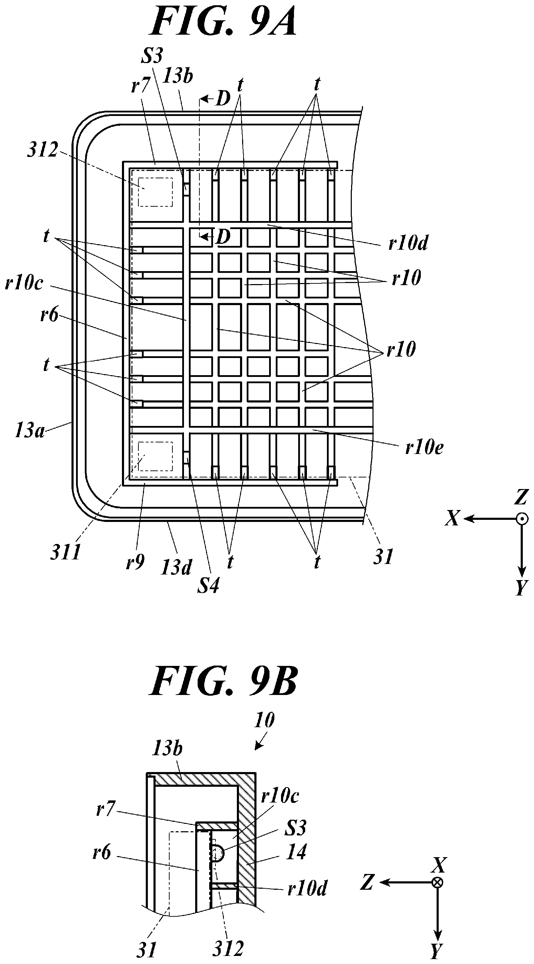

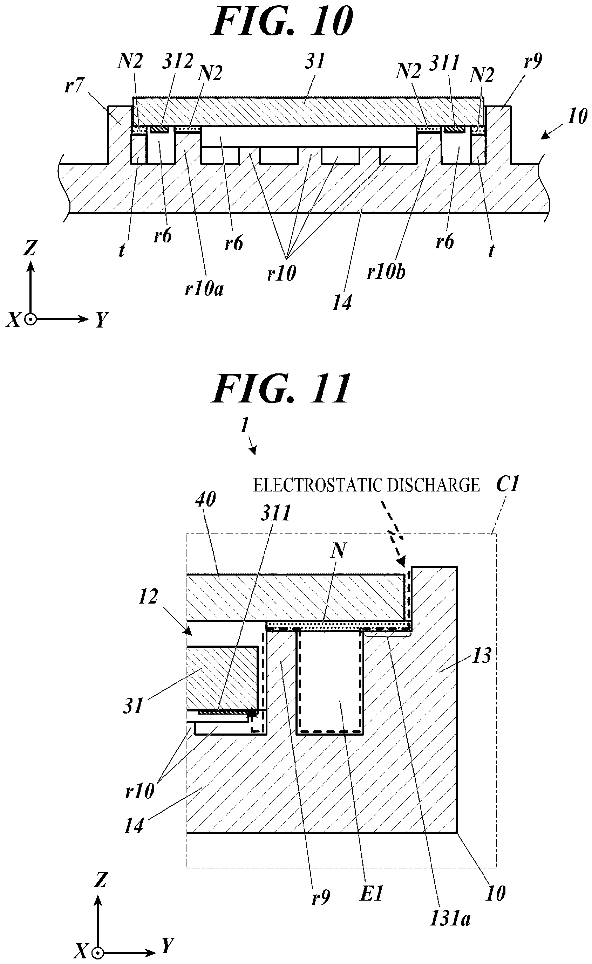

FIG. 6 is a perspective view showing ribs formed in the case according to a first modification. FIG. 7A is a plan view of the case, showing details of the ribs of the first modification. FIG. 7B is a sectional view at line C-C shown in FIG. 7A. FIG. 8 is a perspective view showing ribs formed in the case according to a second modification. FIG. 9A is a plan view of the case, showing details of the ribs of the second modification. FIG. 9B is a sectional view at line D-D shown in FIG. 9A. FIG. 10 is a sectional view of a mounting structure for the photovoltaic panel(s) according to a third modification.

Ribs located under the photovoltaic panel 31 may form any of the structures of the first to third modifications shown in FIG. 6 to FIG. 10. The first modification has the same structure as that shown in FIG. 1 except that in the first modification, the ribs under the arrangement space for the photovoltaic panel 31 in the case 10 include ribs r10a, r10b having the same height as the projections t. The ribs r10a, r10b may be continuous with the lower ribs r10, and the ribs r10, r10a may be combined to form a grating shape. In a state 1 in which the photovoltaic panel 31 is accommodated, the ribs r10a surround two sides of the electrodes 312, 311 of the photovoltaic panel 31. That is, the ribs r6, r7, r10a surround the electrode 312 from directions along the X-Y plane, and the ribs r6, r9, r10b surround the electrode 311 from the directions along the X-Y plane.

The ribs r10a, r10b may have, at points, notches S1, S2 (shown in FIG. 6, FIG. 7A and FIG. 7B) where the wirings 31h that are connected to the electrodes 312, 311 pass.

The second modification has the same structure as that shown in FIG. 1 except that in the second modification, the ribs under the arrangement space for the photovoltaic panel 31 in the case 10 include ribs r10c to r10e having the same height as the projections t. The rib r10c extends in the Y direction and is adjacent to the rib r6. The rib r10d extends in the X direction and is adjacent to the rib r7. The rib r10e extends in the X direction and is adjacent to the rib r9. The ribs r10c to r10e may be continuous with the lower ribs r10, and the ribs r10, r10c to r10e may be combined to form a grating shape. Parts of the ribs r10c, r10d, the parts being from their intersection point to the ribs r7, r6, respectively, and the ribs r6, r7 surround the electrode 312 from the directions along the X-Y plane. Parts of the ribs r10c, r10e, the parts being from their intersection point to the ribs r9, r6, respectively, and the ribs r6, r9 surround the electrode 311 from the directions along the X-Y plane.

The ribs r10c to r10e may have, at points, notches S3, S4 (shown in FIG. 8, FIG. 9A and FIG. 9B) where the wirings 31h that are connected to the electrodes 312, 311 pass. In the drawings, the notches S3, S4 are present at points of the rib r10c near the electrodes 312, 311, but notches may be present at points of the ribs r10d, r10e near the electrodes 312, 311.

The third modification is an example in which, in the same structure as that of the first modification, at least in areas surrounding the electrodes 312, 311, the upper end surfaces of the projections t and the ribs r10a, r10b are joined to the lower surface of the photovoltaic panel 31 with an adhesive member N2. Similarly, in the same structure as that of the second modification, at least in areas surrounding the electrodes 312, 311, the upper end surfaces of the projections t and the ribs r10c to r10e may be joined to the lower surface of the photovoltaic panel 31 with the adhesive member N2.

Any of the structures of the first to third modifications reduces a gap that leads to the electrodes 311, 312 of the photovoltaic panel 31 from the outside of the case 10, and consequently can further keep electricity of electrostatic discharge from reaching the electrodes 311, 312.

The relationship between the ribs r11 to r15, the photovoltaic panel 32, electrodes 321, 322 and the side wall 13 is a horizontally-flipped version of the above-described relationship between the ribs r6 to r10, the photovoltaic panel 31, the electrodes 311, 312 and the side wall 13. In each of the first to third modifications, the ribs r15a, r15b or the ribs 15c to 15e form a structure that is a horizontally-flipped version of the structure that the ribs r10a, r10b or the ribs r10c to r10e form.

The ribs r8, r3, r4A, r5, r11 may have, at points, notches where the wirings 31h, 32h, 33h pass. Alternatively, the ribs r8, r3, r4A, r5, r11 may be present so as to avoid points where the wirings 31h, 32h, 33h pass.

The upper end surfaces of the ribs r1 to r3, r4A, r4B, r5, r8, r11, which are located near the center of the recess 12, are located at substantially the same height as the inner surface (surface facing the inside of the recess 12) of the window member 40. The "substantially the same height" means a height at which they are in contact with the inner surface of the window member 40 or adjacent to the inner surface of the window member 40 with a tolerance clearance in between. Alternatively, the upper end surfaces of the ribs r1, r2, r3, r4A, r4B, r5, r8, r11 may be made to adhere to the inner surface of the window member 40 with an adhesive member, such as double-sided tape.

The upper end surfaces of the ribs r4C, r6, r7, r9, r12 to r14, which are adjacent to the side wall 13, are joined to the inner surface of the window member 40 with the adhesive member N. Alternatively, the upper end surfaces of the ribs r4C, r6, r7, r9, r12 to r14 may be located at substantially the same height as the inner surface of the window member 40.

The window member 40 has, as shown in FIG. 5, a non-transparent edge part 43 and a non-transparent annular part 44 surrounding the central transparent window 41c. To the entire periphery of the edge part 43, the adhesive member (e.g. double-sided tape) N adheres. The edge part 43 covers the upper end surfaces of the ribs r4C, r6, r7, r9, r12 to r14. The annular part 44 covers the upper end surfaces of the ribs r1 to r3, r4A, r4B, r5, r8, r11.

### <Electrostatic Discharge Resistance>

FIG. 11 is a diagram to explain a path for electrostatic discharge to enter. FIG. 11 shows an area C1 shown in FIG. 4.

If electrostatic discharge occurs around the RFID tag 1, the discharged electricity may go into (enter) the case 10 from between the window member 40 and the case 10. If adhesion of the window member 40 to the frame surface 131a with the adhesive member N is high, the electricity is blocked by the adhesive member N and kept from going into the case 10. On the other hand, if the adhesive member N has a part that has peeled off from the frame surface 131a of the case 10, the electricity may go into the case 10 from the peeled-off part.

However, between the frame surface 131a and the photovoltaic panel 31, the rib r9 and a gap E1 are present, so that the creepage distance from the frame surface 131a to the photovoltaic panel 31 is long by a detour path around the gap E1 added. This increases insulation from the frame surface 131a to the photovoltaic panel 31, and consequently can suppress conduction of the entered electricity to the photovoltaic panel 31. Further, if the rib r9 and the window member 40 closely adhere to one other with the adhesive member N, the adhesive member N blocks the electricity, and consequently can suppress conduction of the electricity to the photovoltaic panel 31. Even if there is no adhesive member N, the upper end surface of the rib r9 being at almost the same height as the inner surface of the window member 40 suppresses conduction of the electricity to the photovoltaic panel 31 across the rib r9. These actions improve ESD (Electro-Static Discharge) resistance of the RFID tag 1.

The ribs r6, r7 act in the same manner as the rib r9. For the photovoltaic panel 32, the ribs r12 to r14 act in the same manner, and for the display panel 33, the ribs r1, r2, r4A, r4B, r4C act in the same manner.

As described above, according to the RFID tag 1 of the first embodiment, the case 10 has the ribs r4A, r4B, r4C, r6, r7, r9, r12 to r14. Each of the ribs r4A, r4B, r4C, r6, r7, r9, r12 to r14 extends between the photovoltaic panel 31/32 and the side wall 13 or between the display panel 33 and the side wall 13 so as to be spaced from the side wall 13. Hence, even if electricity of electrostatic discharge goes into the case 10 from between the window member 40 and the case 10, the ribs r4A, r4B, r4C, r6, r7, r9, r12 to r14 make the creepage distance along which the electricity is conducted long and suppress conduction of the electricity to the photovoltaic panels 31, 32 and the display panel 33. This can improve the ESD resistance of the RFID tag 1.

Further, according to the RFID tag 1 of the first embodiment, the side wall 13 of the recess 12 has the frame surface 131a that positions the edge of the lower surface of the window member 40. Further, the upper end surfaces of the ribs r4C, r6, r7, r9, r12 to r14 are joined to the lower surface of the window member 40 with the adhesive member N, and/or the upper end surfaces of the ribs r4A, r4B are located at almost the same height as the lower surface of the window member 40. Hence, electricity of electrostatic discharge, the electricity having entered from between the window member 40 and the side wall 13, is blocked by the ribs r4A, r4B, r4C, r6, r7, r9, r12 to r14 and the window member 40. This can further suppress conduction of the electricity to the photovoltaic panels 31, 32 and the display panel 33.

Further, according to the RFID tag 1 of the first embodiment, the case 10 has, at the upper end of the side wall 13, the step part 131 having the portion closer to the inner periphery being lower, and the surface of the lower portion of the step part 131 constitutes the frame surface 131a. Further, the frame surface 131a is present all around the opening of the recess 12 and joined to the edge of the lower surface of the window member 40 with the adhesive member N. Joining the window member 40 to the frame surface 131a with the adhesive member N can join the window member 40 to the ribs r4C, r6, r7, r9, r12 to r14. Further, this joining can arrange the upper end surfaces of the ribs r1 to r3, r4A, r4B, r5, r8, r11, which are located near the center, and the inner surface of the window member 40 close to one another. Thus, fitting of the window member 40 is improved. Further, around the window member 40, the step part 131 of the side wall 13 is located, which suppresses deviation of the window member 40 in the X, Y directions. This suppresses separation of the window member 40 from the frame surface 131a or from the ribs r4C, r6, r7, r9, r12 to r14, and consequently can suppress aging degradation of the ESD resistance of the RFID tag 1.

Further, according to the RFID tag 1 of the first embodiment, the ribs r1 to r3, r4A, r5 to r14 position the photovoltaic panels 31, 32 and the display panel 33. Thus, the structures that improve the ESD resistance also serve as the structures that position the photovoltaic panels 31, 32 and the display panel 33, which can reduce cost of the case 10. Further, while a gap is provided between the ribs r4C, r6, r7, r9, r12 to r14 and the side wall 13, no large gap is provided between (i) the ribs r4C, r6, r7, r9, r12 to r14 and (ii) the photovoltaic panels 31, 32 and the display panel 33. That is, the gap E1 (shown in FIG. 11) is provided only on the side useful for improvement of the ESD resistance. This can improve the ESD resistance and also suppress unnecessary size increase of the RFID tag 1.

### (Second Embodiment)

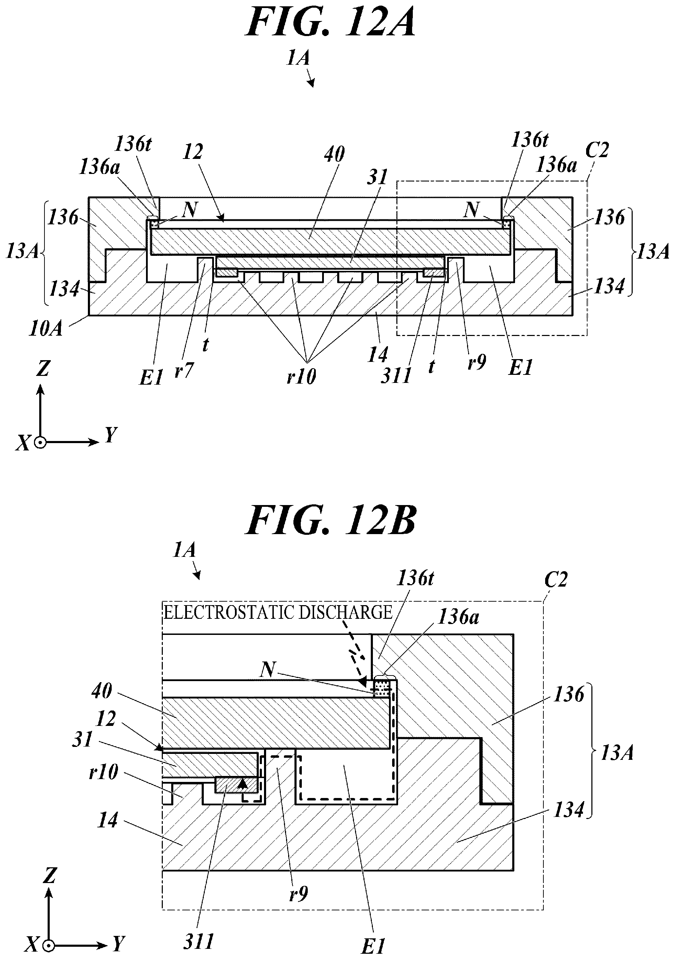

FIG. 12A is a vertical sectional view of an RFID tag of a second embodiment of the present disclosure, schematically showing its internal structure. FIG. 12B is an enlarged view of a part of the vertical sectional view of FIG. 12A. An RFID tag 1A of the second embodiment differs from that of the first embodiment mainly in the structure of a side wall 13A of a case 10A, and the other elements are almost the same as those of the first embodiment.

The side wall 13A of the case 10A has a first part 134 continuous with the bottom plate 14 and a second part 136 located above the first part 134 and engaged with the first part 134. The configuration in which the first part 134 and the second part 136 are individual parts may be present in the entire side wall 13A or may be present in part thereof. How to engage the first part 134 with the second part 136 is not particularly limited, and hence may be, for example, fitting these together or engaging a latching claw(s) with a latching hole(s). The second part 136 has a protruding part 136t that protrudes to the opening of the recess 12. The lower surface of the protruding part 136t is called a frame surface 136a. The frame surface 136a is joined to the edge of the upper surface of the window member 40 with the adhesive member N to position the edge of the upper surface of the window member 40. The frame surface 136a corresponds to an example of the first surface of the present disclosure.

For the window member 40 to be fitted to the case 10A, in a state in which the first part 134 and the second part 136 are separate, the window member 40 is fitted into the second part 136 and joined thereto with the adhesive member N. Thereafter, the second part 136 is engaged with the first part 134, so that the opening of the case 10A can be closed by the window member 40.

### <Electrostatic Discharge Resistance>

As shown in FIG. 12B, if electrostatic discharge occurs around the RFID tag 1A, and the adhesive member N has a part that has peeled off from the window member 40 or the frame surface 136a, the electricity may go into the case 10A from the peeled-off part. However, in the configuration of the second embodiment, the joined part is on the upper surface of the window member 40. Hence, if even the electricity goes into the case 10A, it goes thereinto from the upper surface side of the window member 40 along the side surface thereof, so that the creepage distance for the electricity to enter is long. Further, as in the first embodiment, the rib r9 and the gap E1 are present, so that the creepage distance for the electricity of electrostatic discharge to reach the photovoltaic panel 31 is long. This suppresses conduction of the electricity to the photovoltaic panel 31.

Further, if the rib r9 and the window member 40 are close to or in contact with one another, or are joined to one another with the adhesive member N, the electricity is blocked by the rib r9 and the window member 40. This further suppresses conduction of the electricity of electrostatic discharge to the photovoltaic panel 31.

As described above, according to the RFID tag 1A of the second embodiment, regarding the ribs r4A, r4B, r4C, r6, r7, r9, r12 to r14, the second embodiment exhibits the same effects as the first embodiment. Further, according to the RFID tag 1A of the second embodiment, the side wall 13A of the case 10A includes the first part 134 and the second part 136 located above the first part 134. Further, the second part 136 has the inwardly protruding part 136t, and the lower surface of the protruding part 136t constitutes the frame surface 136a that positions the edge of the upper surface of the window member 40. These structures can further lengthen the creepage distance for electricity of electrostatic discharge, the electricity having entered from between the window member 40 and the case 10A, to be conducted to the photovoltaic panels 31, 32 and the display panel 33, and further improve the ESD resistance of the RFID tag 1A.

Some embodiments have been described above. However, the present invention is not limited to the above embodiments. For example, in the first embodiment and the second embodiment, the upper end surfaces of the ribs r1 to r3, r4A to r4C, r5 to r9, r11 to r14 are located at almost the same height as the inner surface of the window member 40 or joined to the inner surface of the window member 40 with the adhesive member N, but the upper end surfaces of the ribs r1 to r3, r4A to r4C, r5 to r9, r11 to r14 may be separate from the inner surface of the window member 40 with a gap in between. Further, in the above embodiments, the photovoltaic panels and the display panel are used as the functional modules, but the photovoltaic panels may be various other modules. Examples thereof include: sensor modules that detect temperature, humidity, illuminance, oscillation, acceleration and so forth; sound collectors; and loudspeakers. The number of functional modules is not particularly limited, either. The details described in the embodiments, such as the specific shapes of the ribs and the shape of the circuit board, can be appropriately modified within a range not departing from the scope of the invention.

### Industrial Applicability

The present invention is applicable to an RFID tag including a functional module(s).

### Reference Sings List

1, 1A RFID Tag
10, 10A Case
12 Recess
13, 13A Side Wall
131 Step Part
131a Frame Surface (First Surface)
134 First Part
136 Second Part
136a Frame Surface (First Surface)
136t Protruding Part
14 Bottom Plate
r1 to r3, r4A to r4C, r5 to r9, r11 to r14 Rib
r10, r10a to r10e, r15, r15a to r15e Rib
20 Circuit Board
25 RFID IC
31, 32 Photovoltaic Panel
33 Display Panel
40 Window Member
N Adhesive Member

## Claims

1. An RFID tag comprising:
an RFID IC;
a functional module;
a case having a recess and accommodating the RFID IC and the functional module in the recess; and
a window member disposed in an opening of the recess,
wherein the case has a rib located between the functional module and a side wall of the recess so as to be spaced from the side wall.

2. The RFID tag according to claim 1,
wherein the side wall has a first surface that positions an edge of the window member, and
wherein an end surface of the rib, the end surface being on a side where the opening is provided, is joined to an inner surface of the window member with an adhesive member.

3. The RFID tag according to claim 1,
wherein the side wall has a first surface that positions an edge of the window member, and
wherein an end surface of the rib, the end surface being on a side where the opening is provided, and an inner surface of the window member are at a same height.

4. The RFID tag according to claim 2 or 3,
wherein the case has, at an upper end of the side wall, a step part having a portion closer to an inner periphery being lower, and
wherein the first surface is a surface of the lower portion of the step part, present all around the opening, and joined to the edge of the window member with the adhesive member.

5. The RFID tag according to claim 2 or 3,
wherein the side wall has a first part and a second part that is located above the first part and engaged with the first part,
wherein the second part has a protruding part that protrudes to the opening of the recess, and
wherein the first surface is a lower surface of the protruding part, present all around the opening, and joined to the edge of the window member with the adhesive member.

6. The RFID tag according to any one of claims 1 to 5, wherein the rib positions the functional module.
